Europäisches Patentamt

European Patent Office

Office européen des brevets

(11) Publication number: **0 000 666**

**A1**

(12) # EUROPEAN PATENT APPLICATION

(21) Application number: **78300206.6**

(22) Date of filing: **27.07.78**

(51) Int. Cl.²: **B 65 G 49/04**

(30) Priority: **30.07.77 ES 461204**

(43) Date of publication of application:
**07.02.79 Bulletin 79/3**

(84) Designated contracting states:
**BE CH DE FR GB LU NL SE**

(71) Applicant: **INDUSTRIAS BALAY,
S.A. Carr. Montanana
19.-Zaragoza. (ES)**

(72) Inventor: **Lobera Gamez,
Francisco Jose Paseo de Cuellar 51
Zaragoza. (ES)**

(74) Representative: **Godwin, Edgar James et al
MARKS & CLERK
57-60 Lincoln's Inn Fields
London, W.C.2A 3LS. (GB)**

(54) Transport apparatus for conveying an article through a production line.

(57) Transport apparatus for conveying an article through a production line in which the article is to be subjected to treatment by dipping. An arm (3) holding the article (14) is moved along a track (11) defining a closed circuit. In order to ensure uniform treatment of articles of different shapes and to prevent liquids from being carried over from one dipping bath (12) to another, means are provided for swinging the arm (3) and for turning the arm (3) about its longitudinal axis (X-X'). The production line may be a dip enamelling line.

Fig. 1

EP 0 000 666 A1

- 1 -

## Transport Apparatus for Conveying an Article through a Production Line

This invention relates to transport apparatus for conveying an article through a production line in which the article is to be subjected to treatment by dipping.

The production line in conjunction with which the transport apparatus is to be used may be a continuous process dip enamelling line. Up until now, the process followed in industry for enamelling steel parts that are to be vitrified has been carried out in three stages that can be perfectly differentiated from one another, these being pickling or pretreatment, the application of the enamel, and vitrification. It may be said that, in the pickling process, the basic stages as performed in succession to one another are degreasing, rinsing, etching (pickling proper), rinsing, neutralizing, and passivating, so that the steel parts are then ready to go on to the stage wherein the enamel is applied.

Looking back in time, it may be said that the methods followed in each one of these stages have been constantly developed in pursuit of two primordial purposes, which are to make it feasible that the said stages can be adapted to the morphological and specific properties of each part to be enamelled whatever they may be, and to rationalize the work so as to achieve a reduction in labour requirements and power consumption, and at the same time increase productivity.

Along these lines of development, the pickling or anc- illiary operation, which in principle was done by dipping using hand-controlled hoist blocks, was suddenly revolutionized with the appearance of spray tunnels, with the parts being mechanically conveyed, which enabled very high production rates per man to be achieved, with technically satisfactory results too. Nonetheless, this system is now no longer considered to be ideal since it involves a high maintenance cost and a similarly high power consumption in operation, apart from the initial cost of the installation itself.

In order to overcome these disadvantages there has now been a return, in part at least, to the original dipping system, employing programmed-cycle cranes, although this system does frequently give rise to difficulties with liquids being transferred, which difficulties are hard to obviate.

The same may be said of the enamel application stage, where there has been successive development from hand dipping to electrostatic aerographic application and, in modern times, to electrophoretic and dry powder application.

For all these reasons then, and very much in spite of all technical advances, dipping with greater or lesser mechanical assistance, still persists and competes with all modern spray methods embodying more advanced technology, even to the extent of the old dipping method having no substitute in certain cases, owing to the efficiency that can be achieved with it, and its economy.

In any case, whichever system is used for performing the stages mentioned above, it has been found that the greatest difficulties arise as the result of the actual morphology of the part to be processed. In this regard it is found that in the above-mentioned stages involving pickling, drying, rinsing, enamelling, and so forth, those parts possessing indentations or odd shapes in particular, each require to be placed in a very special position so as to avoid air being trapped, enamel being restricted, and so on, and this in turn means that hand labour needs to be used at various places in the enamelling plant in order to position each part in the most favourable position for the execution of each stage or phase, this being all the more true when it is realized that any one part may require to be placed in two opposing positions in order for any two stages or phases to be satisfactorily accomplished.

The transport system we are concerned with in this invention does, by overcoming all these difficulties, provide a definitive solution, allowing the enamelling installation advantageously to become part of a continuous production line and to operate in conjunction with the dipping method for pickling, in addition to enabling the enamel too to be applied by dipping, where all this process is accomplished without any manual intervention being needed between the two stages, as has been the case up to now with all known installations.

In general terms the present invention provides transport apparatus for conveying an article through a production line in which the article is to be subjected to treatment by dipping, the apparatus comprising a rigid track defining a closed circuit, an arm which is adapted to hold the article and which is movably mounted on the track, means for moving the arm along the track, means for swinging the arm in

- 4 -

a plane transverse to its direction of motion along the track, and means for turning the arm about its longitudinal axis.

In an installation for continuous dipping treatment of parts to be enamelled the pieces of equipment used in each one of the stages in a conventional dipping treatment plant are arranged opposite a rigid cyclic structure which serves the purpose of supporting the arm to hold the part being treated, and moreover there are means on top of the structure that make the holding arm travel, means to provide said arm with at least one revolving motion about its own axis, and with a revolving motion at right angles to its direction of travel, where the extent of these motions is in accordance with the shapes of the parts to be processed in the plant.

It is due to the said swinging and turning motions that the article being processed can be made to vary its position while travelling and entering and leaving all the baths that are necessary for preparing its surface for enamelling, where at the same time the revolving motion about the axis of the holding arm avoids there being any air trapped inside the article and enables any trapped liquid to run out therefrom. The article being processed can then be made to travel into a drying length or stage, and afterwards into a cooling stage so that the enamel can then forthwith be applied by dipping. Upon emerging from the enamel dip, the article travels along a further drying length and simultaneously the supporting arm undergoes suitable motions about itself so as to achieve the draining of any liquid that remains therein, whereupon it finally reaches a point where the article is withdrawn and removed to the conveyor

- 5 -

which will take it to the vitrifying stove, while the holding arm then remains free and ready to be returned to recommence the cycle with a further article.

Any one of a number of different systems may be employed for achieving the said motions, and the use of one or another will depend upon such variables as the weight of the article to be enamelled, its geometrical features, the degree of perfection required in the process, the hourly production rate, and so forth. In particular, this consideration may govern the length which the installation can be given, and hence its arrangement as viewed from above, the different shapes that can be selected being the elliptical. rectangular with the short  sides curved, or zigzag. The radii of curvature in large installations may lead to there being wasted space between the two parallel lengths, and to avoid this  a closed rail conveyor system is installed instead. being provided with a pulling connection placed at a suitable distance. and means to guide the holding arm optionally towards whichever side is required.

With all the above features, and upon being a continuous and enclosed installation, the following advantages are achieved:

A. Continuous production process, as in spray tunnels.
B. Pickling by dipping. which is very simple to install, cheap to maintain, and economical as regards its power consumption.
C. Enamel is applied by dipping, which, as was stated at the outset, is an economical

- 6 -

system with a minimum wastage of enamel,
and in addition  it generates no pollution.

D.  No need for labour between the stages where
the pickling takes place and where the enamel
is applied.

E.  Significant saving in floor space in comparison to the requirements of installations
at present known.

F.  Finally, the system being dealt with here requires nothing at  all in the way of large
capital expenditure.

The invention will be described further, by way
of example only, with reference to the accompanying
drawings, in which:

Figure 1 is a transverse section through transport
apparatus  for conveying an article through a dip
enamelling production line, one bath of which is shown
in cross section; and

Figure 2 is a schematic plan view of the production
line, the stages of the production process being indicated.

When a steel part 14 travels from the dip in a bath
12 belonging to any stage at all in the production proc-
ess, to the following bath, it tends  to carry with it
products from the previous stage, which are normally
harmful to the elements in the following stage,  and
they may even contaminate the actual products used for
the treatment.  Furthermore, owing to the characteristic
shape that each part 1- possesses, the different pro-
ducts used for the treatment will tend to remain to a
greater degree on some areas more than on others on
the part, which would cause stresses that give rise
to cracking and deterioration of the enamel and hence
its becoming useless.   These difficulties have

- 7 -

in the past meant that skilled labour has had to be used at each one of the stages in the process in order to arrange the part manually in the most favourable position and thus obviate the problems described above.

According to the present invention, a rigid structure on track 11 defines a close circuit along which a carriage 1 is driven by conventional travelling means (not illustrated). A support or bearing 4 for an arm 3 is attached to the carriage 1 through a pivot shaft 5, and the arm 3 is fitted at one of its ends with a tool 2 for holding or grasping the part 14.

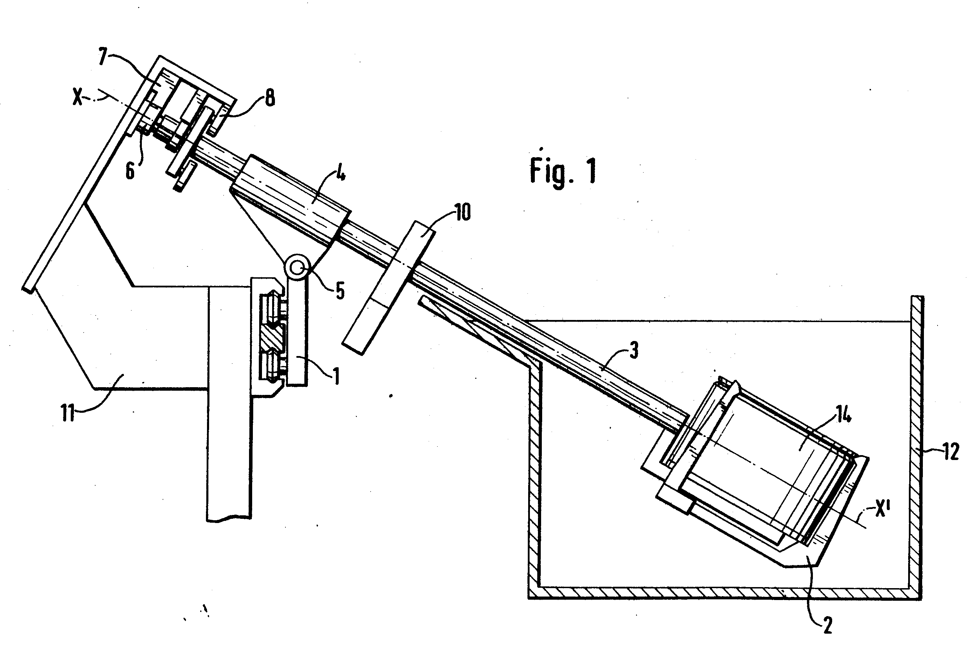

As has been mentioned above, the part 14 is required to undergo a series of motions from one position to another as it travels from one stage to another, and in each one of these latter. The said motions and positions are in principle achieved through the swinging of the holding arm 3 the plane of the drawing (Fig 1), and the turning of the arm 3 about its own longitudinal axis $X-X^1$. For this purpose, a wave shaped slide surface or guideway 7 is provided on the structure 11, having indentations or protrusions, or similar parts, to cause the said rotation when a roller 6 on the end of the holding arm 3 slides along the guideway. In view of the fact that each different kind of part 14 to be processed may require to undergo different motions and about different postions, the sliding surface or guideway 7 will be different for each type of part to be processed.

The means by which the holding arm 3 revolves about its own axis are comprised, i. rmatical

construction of the equipment, by the sliding or engagement in certain areas on the actual slide surface or guideway 7 of the roller 6 at the end of the holding arm 3.

A counterweight 10 is provided in order to make the holding arm 3 return to its original position after having revolved about its axis, or after having been swung upwards from the position shown in Fig 1.

In a further practical construction, gear wheels and racks are provided along the slide surface or guideway 7 so as to make the holding arm 3 return to its initial position.

It will be appreciated that there is a multitude of ways and means that can be thought of, or which have already been thought of, so as to achieve identical motions to those described.

Racks and stops 8 may be used instead of, independently form, or in combination with the aforementioned components, as may be the case for example where the circuit is zigzag in shape when viewed from above, and it is desired to utilize the space between the two parallel sides, wherein directional racks would be employed inside the space, these being already known, for the purpose of directing the rotation of the arm towards the inside of the said space at the required moment.

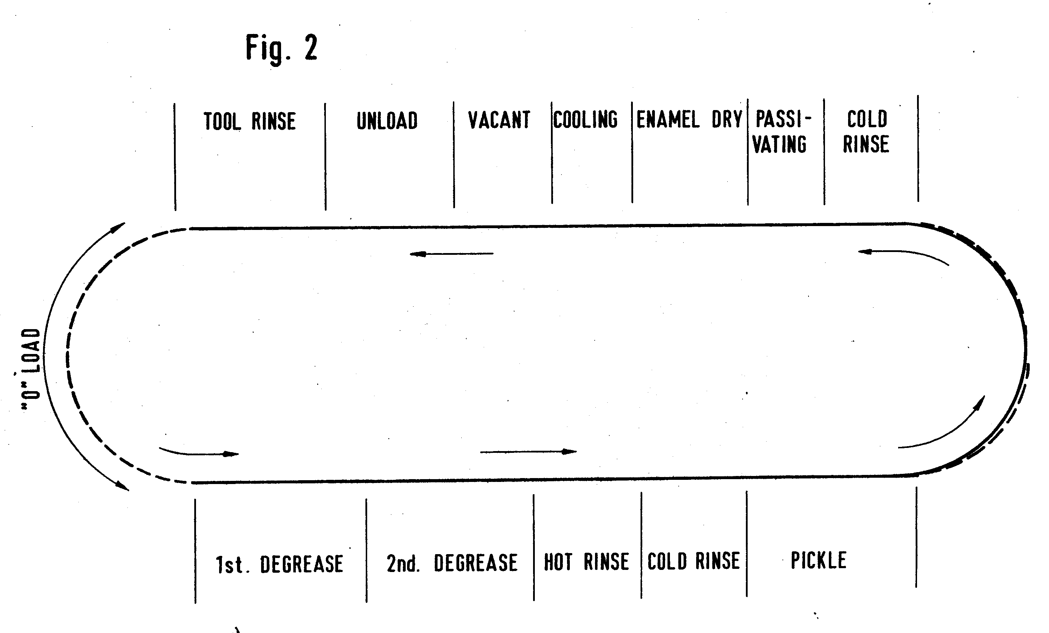

The whole installation is integrated into a main structure which holds the track for the conveyor chain, and additionally accommodates the bath as required for dipping. The process stages are shown in Fig 2.

Differential detectors are moreover provided, whose purpose is to programme selective dipping in whatever bath is required by the parts to be processed.

A hood, fitted with windows to allow observation and control, and provided with permanent extraction equipment, is arranged over the baths which might emit gases or fumes.

The installation is completed with pumps and valves in the circuits that require them, a length to facilitate loading and unloading the part to be processed, and another length to facilitate washing the tool 2 used to hold the part, once it has been unloaded and prior to commencement of the following cycle.

- 1. -

CLAIMS

1.  Transport apparatus for conveying an article through a production line in which the article is to be subjected to treatment by dipping, the apparatus comprising a rigid track (11) defining a closed circuit, an arm (3) which is adapted to hold the article (14) and which is movably mounted on the track (11), means for moving the arm (3) along the track (11), means for swinging the arm (3) in a plane transverse to its direction of motion along the track (11), and means for turning the arm (3) about its longitudinal axis $(X-X^1)$.

2.  Transport apparatus as claimed in claim 1, in which the arm swinging means comprises a guideway (7) which is fixed to the track (11) and extends along the track (11), the guideway (7) having indentations and protrusions, the arm (3) having at least one part (6) which cooperates with the guideway (7) in order to cause swinging of the arm (3).

3.  Transport apparatus as claimed in claim 2, in which the said part (6) engages with given zones of the guideway (7) in order to cause selective turning of the arm (3) about its axis $(X-X^1)$.

4.  Transport apparatus as claimed in any one of claims 1 to 3, in which the arm (3) is mounted in a bearing (-) allowing the arm (3) to turn about its axis $(X-X^1)$, the bearing (-) being movably mounted on the track (11).

5.  Transport apparatus as claimed in any of claims 1 to 4, in which the arm (3) is mounted on a pivot shaft (5) allowing the arm (3) to swing in a plane transverse to its direction of motion along the track (11).

6. Transport apparatus as claimed in any of claims 1 to 5, in which the arm (3) can be swung through more than 180°.

7. Transport apparatus as claimed in any of claims 1 to 6, in which the arm 3 carries a counterweight (10) urging the arm (3) to return to a given position after the arm (3) has been swung or turned from that position.

8. An installation for treating an article, comprising a production line in which the article is to be subjected to treatment by dipping, characterised by transport apparatus as claimed in any preceding claim, for conveying the article through the production line.

9. An installation as claimed in claim 8, in which the production line is a dip enamelling line.

Fig. 1

0000666

# Fig. 2

| TOOL RINSE | UNLOAD | VACANT | COOLING | ENAMEL DRY | PASSI-VATING | COLD RINSE |

"0" LOAD

| 1st. DEGREASE | 2nd. DEGREASE | HOT RINSE | COLD RINSE | PICKLE |

## DOCUMENTS CONSIDERED TO BE RELEVANT

| Category | Citation of document with indication, where appropriate, of relevant passages | Relevant to claim |
|---|---|---|
| X | US – A – 1 895 622 (A.H.HANNON)<br>* Page 1, lines 26-46; figures; page 2, lines 7-124 * | 1,2,3, 4,5 |
| X | US – A – 2 963 140 (J.BARTON)<br>* Column 2, line 56 to column 3, line 75; figures * | 1,2,3, 4,5 |
| X | US – A– 2 177 982 (A.H.HANNON)<br>* Claims 1,2,3; figures * | 1,3,4, 5 |
| X | DE – A – 2 444 317 (W.SCHAAL)<br>* Page 6, line 14 to page 8, line 10; figures * | 1-5, 8,9 |

**CLASSIFICATION OF THE APPLICATION**

B 65 G 49/04

**TECHNICAL FIELDS SEARCHED (Int.Cl.²)**

B 65 G 49/04
C 23 D 11/00
C 25 D 17/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Have | 25-09-1978 | VAN ROLLEGHEM |